# EUROPEAN PATENT APPLICATION

(11) **EP 2 677 279 A2**
(43) Date of publication of application: **25.12.2013**
(21) Application number: 13169654.4
(22) Date of filing: 29.05.2013
(51) Int. Cl.: G01D 4/00, G01D 13/04

(54) **Digital meter communication system and method of controlling the same**

(30) Priority: 20.06.2012 KR 20120066272
(71) Applicant: LSIS Co., Ltd., Dongan-Gu, Anyang Gyeonggi-Do (KR)
(72) Inventor: Seon, Jong-Kug, 431-080 Anyang-si, Gyeonggi-do (KR)
(74) Representative: Lang, Johannes

(57) **Abstract**

Disclosed are a digital meter communication system and a method of controlling the same. The digital meter includes: a signal detecting unit metering analog data for used energy; a converter converting the analog data for used energy metered from the signal detecting unit into digital data for used energy; a modulating unit modulating the converted digital data for used energy; an antenna transmitting the modulated digital data for used energy to a data collection device with maximum power; and a controlling unit controlling to transmit the metered data to the data collection device through the antenna.

## Description

### BACKGROUND

The embodiment relates to a digital meter communication system and a method of controlling the same.

A digital meter refers to a gauge meter installed in a house using power, gas, running water, and hot water for transmitting metering data of the power, gas, running water, and hot water to a metering terminal according to a preset communication protocol.

The metering terminal is installed at a consumer house in a large-scale apartment complex to collect common data from various measurement meters in respective houses and to transmit the collected data to a billing system and a data collection device.

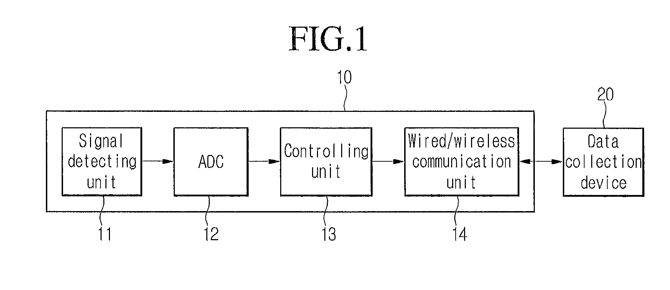

FIG. 1 is a block diagram illustrating a configuration of a digital meter according to the related art.

Referring to FIG. 1, the digital meter according to the related art includes a signal detecting unit 11, an analog/digital converter (ADC) 12, a controlling unit 13, and a wired/wireless communication unit 14.

In order to collect information about electricity, gas, running water or a relay, the digital meter 10 according to the related art collects metering information using the signal detecting unit 11 and outputs digital data by converting the data collected in the form of analog data into the digital data using the ADC 12. The converted digital data are computed and processed in the controlling unit 13 and then transmitted to a data collection device 20 through the wired/wireless communication unit 14.

In this manner, according to the related art, a wired or wireless communication scheme is used in order to transfer and collect the metering information. The wired communication scheme requires a wired cable, and there is spatial limitation with a high cost on installation of the wired cable. In addition, power line communication of the wired communication scheme requires expensive components and complicated system and generates a noise in a power line, which causes a malfunction of a communication system.

### SUMMARY

An embodiment provides a digital meter communication system capable of remote-metering electricity, gas, and running water and allowing a user to easily confirm and settle a used amount of electricity, gas, and running water by collecting metered information in a simple and efficient communication scheme, and a method of controlling the same.

An embodiment provides a digital meter communication system capable of allowing a user to easily confirm and utilize a used amount of electricity, gas, and running water metered from a remote place and settlement information thereof using a terminal designated by a user.

According to the embodiment, there is provided a digital meter including: a signal detecting unit metering analog data for used energy; a converter converting the analog data for used energy metered from the signal detecting unit into digital data for used energy; a modulating unit modulating the converted digital data for used energy; an antenna transmitting the modulated digital data for used energy to a data collection device with maximum power; and a controlling unit controlling to transmit the metered data to the data collection device through the antenna.

The controlling unit may receive a request signal for the data for used energy from the data collection device, and control to transmit data corresponding to the received request signal to a corresponding data collection device.

The controlling unit may controls to modulate data corresponding to the request signal among the data for used energy metered by the signal detecting unit when the request signal for the data for the used energy is received from the data collection device.

The digital meter may further include: a demodulating unit removing a high frequency signal from the converted digital data for used energy; an oscillator generating a high frequency signal; and an impedance matching unit performing impedance matching with respect to data to be transmitted to the data collection device.

The modulating unit may modulate the high frequency signal generated from the oscillator with the digital data for used energy.

The modulating unit may modulate the digital data for used energy through one of an amplitude modulation scheme, a frequency modulation scheme, and a phase modulation scheme.

According to the embodiment, there is provided a digital meter communication system including: a digital meter metering used energy, converting analog data corresponding to a data request signal received from a data collection device into digital data, and transmitting the converted digital data to the data collection device through an antenna; and a data collection device requesting the data for used energy through the antenna, collecting the requested data for used energy, and outputting the collected data.

The data collection device may transmit the acquired data to a preset destination.

The preset destination may include a settling system.

The data collection device may receive and output billing information corresponding to the acquired data transmitted to the settling system.

The digital meter may modulate data for used energy corresponding to a received request signal for the data for used energy when the request signal for the data for used energy is received from the data collection device, and transmits the modulated data to the data collection device.

The digital meter may transmit the modulated data with maximum power to the data collection device.

### BRIEF DESCRIPTION OF THE DRAWINGS

FIG. 1 is a block diagram illustrating a configuration of a digital meter according to the related art.

FIG. 2 is a block diagram illustrating a digital meter communication system according to the embodiment.

FIG. 3 is a block diagram illustrating a data metering unit of a digital meter according to the embodiment.

FIG. 4 is a block diagram illustrating a data collecting unit of a data collection device according to the embodiment.

FIG. 5 is a flowchart illustrating a communication operation of the digital meter according to the embodiment.

FIG. 6 is a flowchart illustrating a communication operation of the digital meter according to the embodiment.

### DETAILED DESCRIPTION OF THE EMBODIMENTS

Terms and words used in the specification and the claims shall not be interpreted as commonly-used dictionary meanings, but shall be interpreted as to be relevant to the technical scope of the invention based on the fact that the inventor may property define the concept of the terms to explain the invention in best ways.

Therefore, the embodiments and the configurations depicted in the drawings are illustrative purposes only and do not represent all technical scopes of the embodiments, so it should be understood that various equivalents and modifications may exist at the time of filing this application.

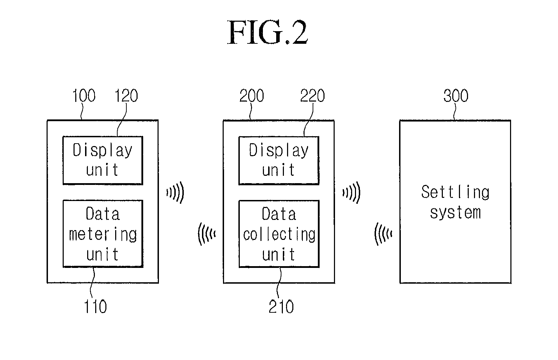

FIG. 2 is a block diagram illustrating a digital meter communication system according to the embodiment.

Referring to FIG. 2, the digital meter communication system according to the embodiment includes a digital meter 100, a data collection device 200, and a settling system 300.

The digital meter 100 is a metering unit installed inside a house to collect a used amount of power, gas, running water, and electricity, and may include a data metering unit 110 metering used energy such as the power, the gas, the running water, and the electricity, and a display unit 120 displaying metered data.

The data collection device 200 may include a data collecting unit 210 collecting data for used energy received from the digital meter 100 in a wireless scheme, and a display unit 220 outputting collected data and billing information according to the collected data by receiving the collected data and billing information from the data collecting unit 210 and the settling system 300, respectively.

The data collection device 200 may include a terminal such as a mobile terminal designated by a user.

The settling system 300 may receive information about the data for the used energy received from the data collection device 200 and may calculate corresponding billing information. The settling system 300 may transmit the calculated billing information to the data collection device 200.

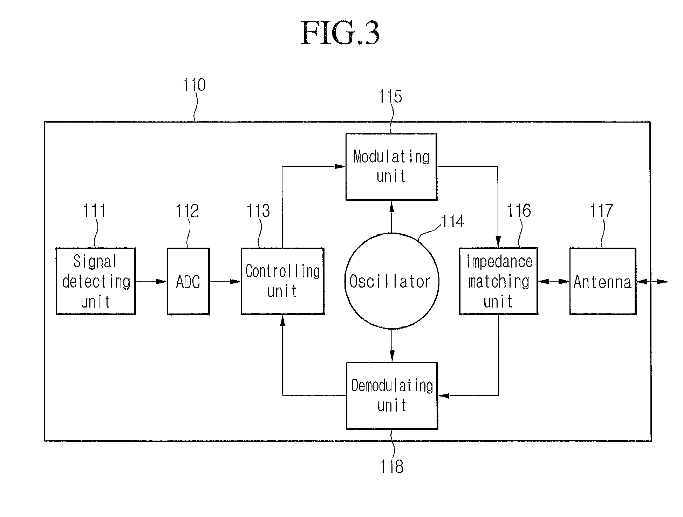

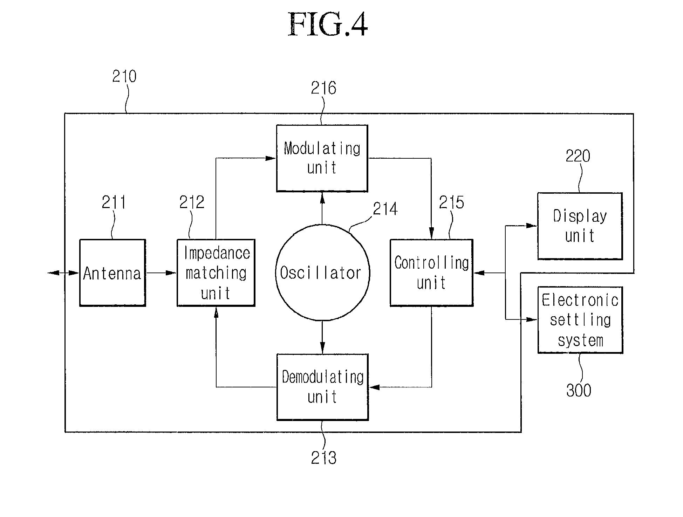

As described above, the digital meter communication system according to the embodiment may include the digital meter 100, the data collection device 200, and the settling system 300 for billing. Hereinafter, the construction of the digital meter 100 and the data collection device 200 will be described in detail with reference to FIGS. 3 and 4.

FIG. 3 is a block diagram illustrating the data metering unit according to the embodiment.

Referring to FIG. 3, the data metering unit 110 of the digital meter 100 according to the embodiment includes a signal detecting unit 111, an analog to digital converter (ADC) 112, a controlling unit 113, an oscillator 114, a modulating unit 115, an impedance matching unit 116, an antenna 117, and a demodulating unit 118.

The signal detecting unit 111 may detect a data signal for metering used energy such as power, gas, running water, and electricity used in a house. The signal detecting unit 111 may detect an analog signal such as a voltage or current.

The ADC 112 may convert analog data for used energy metered by the signal detecting unit 111 into digital data for used energy.

The controlling unit 113 may compute or control the converted digital data for used energy converted by the ADC 112. The controlling unit 113 may detect a data request command from the data collection device 200 through a wireless link. Upon receiving the detected data request command, the controlling unit 113 may extract corresponding data from the metered and converted digital data for used energy.

The oscillator 114 may generate a voltage signal. In the embodiment, a high frequency signal may be generated using a high frequency oscillator, and the generated high frequency signal and the digital data for used energy may be modulated by the modulating unit 115.

The modulating unit 115 may modulate the high frequency signal generated from the oscillator 114 and the digital data for used energy converted by the ADC 112. The modulating unit 115 may modulate the high frequency signal and the digital data for used energy in an amplitude modulation scheme. In addition to the amplitude modulation scheme, the modulating unit 115 may use various modulation schemes such as a frequency modulation scheme or a phase modulation scheme.

The impedance matching unit 116 may perform impedance matching with respect to the data for used energy modulated by the modulating unit 115 to transmit the modulated data for used energy to the data collection device 200 through the antenna 117.

The antenna 117 may receive the data request signal from the data collection device 200 and transfer the received data request signal to the controlling unit 113. Further, the antenna 117 may transmit data corresponding to the data request signal received from the data collection device 200 at maximum power of the impedance matching unit 116. The antenna 117 may include a loop antenna. The antenna 117 is connected to the data collection device 200 in a wireless scheme and may transceive a wireless signal in a magnetic induction scheme using a magnetic field or an inductive coupling scheme.

The demodulating unit 118 may demodulate the data request signal received through the antenna 117, and may transfer the demodulated data request signal to the controlling unit 113.

FIG. 4 is a block diagram illustrating a data collecting unit of the data collection device according to the embodiment.

Referring to FIG. 4, the data collecting unit 210 of the data collection device 200 according to the embodiment includes an antenna 211, an impedance matching unit 212, a demodulating unit 213, an oscillator 214, a controlling unit 215, a modulating unit 216, and a display unit 220.

The antenna 211 may be configured as the antenna 117 adopted in the data metering unit 110.

The impedance matching unit 212 may perform impedance matching with respect to a signal for transmitting a data request signal to the digital meter 100 through the controlling unit 215.

When receiving data for used energy corresponding to the data request signal requested from the controlling unit 215, the demodulating unit 213 may demodulate the received data for used energy.

The oscillator 214 generates a signal using a high frequency oscillator or a low frequency oscillator, and enables the modulating unit 216 to modulate the generated signal and data about billing information received from the electronic settling system 300.

According to the embodiment, the controlling unit 215 may generate a request signal for data metered by the digital meter 100. Further, the controlling unit 215 confirms the data for the used energy received from the digital meter 100 to output information about the data for used energy to the display unit 220 or transmit the information to the electronic settling system 300. In addition, the controlling unit 215 may output the billing information received from the electronic settling system 300 to the display unit 220.

The modulating unit 216 may modulate a control signal for requesting the metered data for used energy with the signal generated from the oscillator 214 according to a control signal of the controlling unit 215. The modulating unit 216 may adopt the same modulating scheme as that of the modulating unit 115 of the data metering unit 110 of the digital meter 100.

The display unit 220 may output the metered data for used energy received from the digital meter 100. Further, the display unit 220 may receive billing information corresponding to the data of used energy and output the received billing information.

As described above, the data metering unit 110 of the digital meter 100 and the data collecting unit 120 of the data collection device 200 constituting the digital meter communication system according to the embodiment may meter the used energy and may request and collect the metered data through wireless communication to provide the metered data to a user.

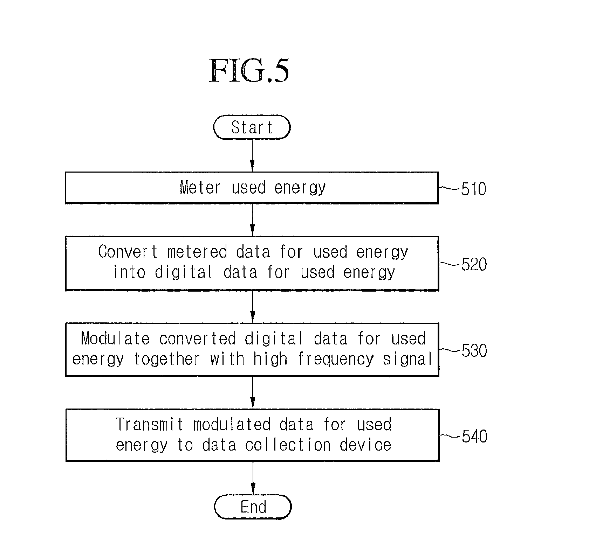

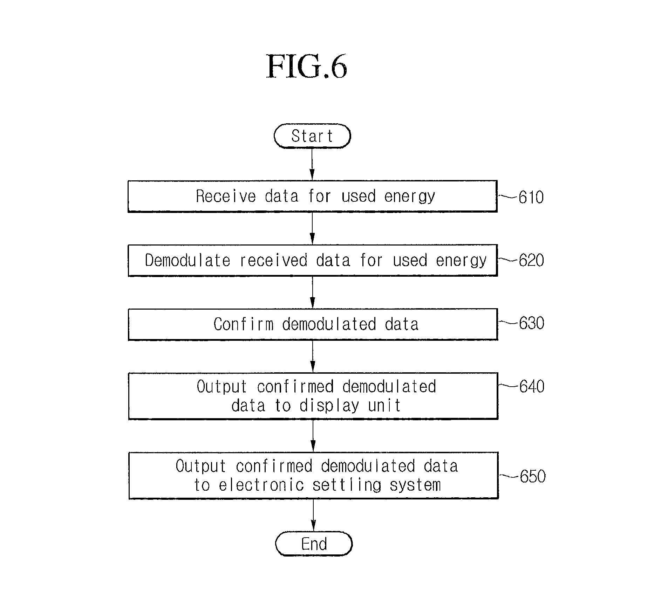

Hereinafter, a communication operation of the digital meter according to the embodiment will be described in detail with reference to FIGS. 5 and 6.

FIG. 5 is a flowchart illustrating a communication operation of the digital meter according to the embodiment.

Referring to FIG. 5, a data metering unit 110 of a digital meter 100 may meter used energy such as power, gas, running water, and electricity (510).

An ADC 112 may convert the metered data for used energy into digital data for used energy (520).

A modulating unit 115 may modulate the converted digital data for used energy together with a high frequency signal generated by an oscillator 114 (530).

The modulated data for used energy may be transmitted to a data collection device through an antenna 117 (540). The data for used energy may be extracted and transmitted upon the request of the data collection device 200.

FIG. 6 is a flowchart illustrating a communication operation of the digital meter according to the embodiment.

Referring to FIG. 6, a data collecting unit 210 of a data collection device 200 receives data for used energy from a digital meter 100 (610), and demodulates the received data for used energy (620).

The data collecting unit 210 of a data collection device 200 may confirm the demodulated data to output the confirmed demodulated data to a display unit 220 (640) or a settling system 300 (650).

The data collecting unit 210 of a data collection device 200 may receive billing information corresponding to the data for used energy output to the settling system 300, and may output the received billing information to the display unit 220.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A digital meter comprising:
a signal detecting unit metering analog data for used energy;
a converter converting the analog data for used energy metered from the signal detecting unit into digital data for used energy;
a modulating unit modulating the converted digital data for used energy;
an antenna transmitting the modulated digital data for used energy to a data collection device with maximum power; and
a controlling unit controlling to transmit the metered data to the data collection device through the antenna.

2. The digital meter of claim 1, wherein the controlling unit receives a request signal for the data for used energy from the data collection device, and controls to transmit data corresponding to the received request signal to a corresponding data collection device.

3. The digital meter of claim 2, wherein the controlling unit controls to modulate data corresponding to the request signal among the data for used energy metered by the signal detecting unit when the request signal for the data for the used energy is received from the data collection device.

4. The digital meter of claim 1, further comprising:
a demodulating unit removing a high frequency signal from the converted digital data for used energy;
an oscillator generating a high frequency signal; and
an impedance matching unit performing impedance matching with respect to data to be transmitted to the data collection device.

5. The digital meter of claim 4, wherein the modulating unit modulates the high frequency signal generated from the oscillator with the digital data for used energy.

6. The digital meter of claim 5, wherein the modulating unit modulates the digital data for used energy through one of an amplitude modulation scheme, a frequency modulation scheme, and a phase modulation scheme.

7. A digital meter communication system comprising:
a digital meter metering used energy, converting analog data corresponding to a data request signal received from a data collection device into digital data, and transmitting the converted digital data to the data collection device through an antenna; and
a data collection device requesting the data for used energy through the antenna, collecting the requested data for used energy, and outputting the collected data.

8. The digital meter communication system of claim 7, wherein the data collection device transmits the collected data to a preset destination.

9. The digital meter communication system of claim 8, wherein the preset destination comprises a settling system.

10. The digital meter communication system of claim 9, wherein the data collection device receives and outputs billing information corresponding to the collected data transmitted to the settling system.

11. The digital meter communication system of claim 7, wherein the digital meter modulates data for used energy corresponding to a received request signal for the data for used energy when the request signal for the data for used energy is received from the data collection device, and transmits the modulated data to the data collection device.

12. The digital meter communication system of claim 11, wherein the digital meter transmits the modulated data with maximum power to the data collection device.
